# EUROPEAN PATENT APPLICATION

(11) **EP 4 478 712 A1**
(43) Date of publication of application: **18.12.2024**
(21) Application number: 23753239.5
(22) Date of filing: 13.02.2023
(51) Int. Cl.: H04N 19/157, H04N 19/105, H04N 19/176, H04N 19/70, H04N 19/119

(54) **IMAGE ENCODING/DECODING METHOD AND DEVICE, AND RECORDING MEDIUM STORING BITSTREAM**

(30) Priority: 13.02.2022 US 202263309642 P
(71) Applicant: LG Electronics Inc., Yeongdeungpo-gu Seoul 07336 (KR)
(72) Inventor: PARK, Naeri, Seoul 06772 (KR); JANG, Hyeongmoon, Seoul 06772 (KR)
(74) Representative: Frenkel, Matthias Alexander
(86) International application number: PCT/KR2023/002061
(87) International publication number: WO 2023/153893

(57) **Abstract**

An image decoding/encoding method and device disclosed herein can: generate a first prediction block of the current block on the basis of a first prediction mode; generate a second prediction block of the current block on the basis of a second prediction mode; determine weights used for the current block on the basis of a weight candidate list including a plurality of pre-defined weight candidates; generate a third prediction block of the current block through the weighted summation of the first prediction block and the second prediction block; and decode/encode the current block on the basis of the third prediction block of the current block.

## Description

### [Technical Field]

The present disclosure relates to an image encoding/decoding method and device, and a recording medium storing a bitstream.

### [Background Art]

Recently, the demand for high-resolution and high-quality images such as HD (High Definition) images and UHD (Ultra High Definition) images has been increasing in various application fields, and accordingly, highly efficient image compression technologies are being discussed.

There are a variety of technologies such as inter-prediction technology that predicts a pixel value included in a current picture from a picture before or after a current picture with video compression technology, intra-prediction technology that predicts a pixel value included in a current picture by using pixel information in a current picture, entropy coding technology that allocates a short sign to a value with high appearance frequency and a long sign to a value with low appearance frequency, etc. and these image compression technologies may be used to effectively compress image data and transmit or store it.

### [Disclosure]

### [Technical Problem]

The present disclosure is to provide a method and a device for adaptively determining a weight based on a weight candidate list.

The present disclosure is to provide a method and a device for configuring a weight candidate list.

The present disclosure is to provide a method and a device for signaling/deriving a flag for adaptively using a weight determination technique.

### [Technical Solution]

An image decoding method and device according to the present disclosure may generate a first prediction block of a current block based on a first prediction mode, generate a second prediction block of the current block based on a second prediction mode, determine a weight used for the current block based on a weight candidate list including a plurality of pre-defined weight candidates, generate a third prediction block of the current block by weighted summing of the first prediction block and the second prediction block based on the determined weight, and decode the current block based on the third prediction block of the current block.

In an image decoding method and device according to the present disclosure, the first prediction mode may represent prediction in a L0 direction, and the second prediction mode may represent prediction in a L1 direction.

An image decoding method and device according to the present disclosure may calculate SAD (Sum of Absolute Difference) values corresponding to the plurality of weight candidates, respectively.

In an image decoding method and device according to the present disclosure, the SAD values may be calculated based on a reference template region and a template region of the current block, and the reference template region may be derived by weighted summing a template region of a L0 reference block and a template region of a L1 reference block based on a weight candidate.

In an image decoding method and device according to the present disclosure, a reordered weight candidate list may be generated by reordering the plurality of weight candidates in ascending order of the SAD values, and a weight used for the current block may be determined from the reordered weight candidate list.

An image decoding method and device according to the present disclosure may obtain a flag indicating whether weighted prediction is performed for the current block from a bitstream.

In an image decoding method and device according to the present disclosure, when the flag indicates that the weighted prediction is performed for the current block, a weight used for the current block may be determined based on a weight candidate having the smallest SAD value among the SAD values.

In an image decoding method and device according to the present disclosure, when the flag indicates that the weighted prediction is not performed for the current block, a weight applied to the first prediction block and a weight applied to the second prediction block may be determined as the same value.

An image decoding method and device according to the present disclosure may determine whether weighted prediction is available for the current block based on a predefined condition.

In an image decoding method and device according to the present disclosure, when the weighted prediction is available for the current block, a weight used for the current block may be determined based on a weight candidate having the smallest SAD value among the SAD values.

In an image decoding method and device according to the present disclosure, when the weighted prediction is not available for the current block, a weight applied to the first prediction block and a weight applied to the second prediction block may be determined as the same value.

In an image decoding method and device according to the present disclosure, the weight candidate list may be configured based on an inter prediction mode of the current block, whether bi-prediction is applied or a size of the current block.

In an image decoding method and device according to the present disclosure, the current block may be divided into a plurality of partitions based on a geometric partitioning mode, the plurality of partitions may include a first partition and a second partition, the first prediction mode may represent prediction using prediction information of the first partition, and the second prediction mode may represent prediction using prediction information of the second partition.

An image encoding method and device according to the present disclosure may generate a first prediction block of a current block based on a first prediction mode, generate a second prediction block of the current block based on a second prediction mode, determine a weight used for the current block based on a weight candidate list including a plurality of pre-defined weight candidates, generate a third prediction block of the current block by weighted summing of the first prediction block and the second prediction block based on the determined weight, and encode the current block based on the third prediction block of the current block.

A computer-readable digital storage medium storing encoded video/image information resulting in performing an image decoding method due to a decoding device according to the present disclosure is provided.

A computer-readable digital storage medium storing video/image information generated according to an image encoding method according to the present disclosure is provided.

A method and a device for transmitting video/image information generated according to an image encoding method according to the present disclosure are provided.

### [Technical Effects]

The present disclosure may decrease weight index signaling overhead and increase compression efficiency by adaptively determining a weight based on a weight candidate list.

The present disclosure may effectively determine a weight by defining a weight candidate list by considering a variety of encoding information.

The present disclosure may decrease signaling overhead and increase prediction accuracy by signaling/deriving a flag for adaptively using a weight determination technique.

### [Brief Description of the Drawings]

FIG. 1 shows a video/image coding system according to the present disclosure.
FIG. 2 shows a rough block diagram of an encoding device to which an embodiment of the present disclosure may be applied and encoding of a video/image signal is performed.
FIG. 3 shows a rough block diagram of a decoding device to which an embodiment of the present disclosure may be applied and decoding of a video/image signal is performed.
FIG. 4 shows an inter prediction method performed by a decoding device 300 as an embodiment according to the present disclosure.
FIG. 5 is a flowchart showing a weight determination method based on a weighted prediction flag according to an embodiment of the present disclosure.
FIG. 6 is a flowchart showing a weight determination method for weighted prediction according to an embodiment of the present disclosure.
FIG. 7 is a flowchart showing a weighted prediction method based on a geometric partitioning mode according to an embodiment of the present disclosure.
FIG. 8 shows a schematic configuration of an inter predictor 332 that performs an inter prediction method according to the present disclosure.
FIG. 9 shows an inter prediction method performed by an encoding device 200 as an embodiment according to the present disclosure.
FIG. 10 shows a schematic configuration of an inter predictor 221 that performs an inter prediction method according to the present disclosure.
FIG. 11 shows an example of a contents streaming system to which embodiments of the present disclosure may be applied.

### [Detailed Description]

Since the present disclosure may make various changes and have several embodiments, specific embodiments will be illustrated in a drawing and described in detail in a detailed description. However, it is not intended to limit the present disclosure to a specific embodiment, and should be understood to include all changes, equivalents and substitutes included in the spirit and technical scope of the present disclosure. While describing each drawing, similar reference numerals are used for similar components.

A term such as first, second, etc. may be used to describe various components, but the components should not be limited by the terms. The terms are used only to distinguish one component from other components. For example, a first component may be referred to as a second component without departing from the scope of a right of the present disclosure, and similarly, a second component may also be referred to as a first component. A term of and/or includes any of a plurality of related stated items or a combination of a plurality of related stated items.

When a component is referred to as "being connected" or "being linked" to another component, it should be understood that it may be directly connected or linked to another component, but another component may exist in the middle. On the other hand, when a component is referred to as "being directly connected" or "being directly linked" to another component, it should be understood that there is no another component in the middle.

A term used in this application is just used to describe a specific embodiment, and is not intended to limit the present disclosure. Singular expressions include plural expressions unless the context clearly dictates otherwise. In this application, it should be understood that a term such as "include" or "have", etc. is intended to designate the presence of features, numbers, steps, operations, components, parts or combinations thereof described in the specification, but does not exclude in advance the possibility of presence or addition of one or more other features, numbers, steps, operations, components, parts or combinations thereof.

The present disclosure relates to video/image coding. For example, a method/an embodiment disclosed herein may be applied to a method disclosed in the versatile video coding (WC) standard. In addition, a method/an embodiment disclosed herein may be applied to a method disclosed in the essential video coding (EVC) standard, the AOMedia Video 1 (AV1) standard, the 2nd generation of audio video coding standard (AVS2) or the next-generation video/image coding standard (ex.H.267 or H.268, etc.).

This specification proposes various embodiments of video/image coding, and unless otherwise specified, the embodiments may be performed in combination with each other.

Herein, a video may refer to a set of a series of images over time. A picture generally refers to a unit representing one image in a specific time period, and a slice/a tile is a unit that forms part of a picture in coding. A slice/a tile may include at least one coding tree unit (CTU). One picture may consist of at least one slice/tile. One tile is a rectangular area composed of a plurality of CTUs within a specific tile column and a specific tile row of one picture. A tile column is a rectangular area of CTUs having the same height as that of a picture and a width designated by a syntax requirement of a picture parameter set. A tile row is a rectangular area of CTUs having a height designated by a picture parameter set and the same width as that of a picture. CTUs within one tile may be arranged consecutively according to CTU raster scan, while tiles within one picture may be arranged consecutively according to raster scan of a tile. One slice may include an integer number of complete tiles or an integer number of consecutive complete CTU rows within a tile of a picture that may be included exclusively in a single NAL unit. Meanwhile, one picture may be divided into at least two sub-pictures. A sub-picture may be a rectangular area of at least one slice within a picture.

A pixel, a pixel or a pel may refer to the minimum unit that constitutes one picture (or image). In addition, 'sample' may be used as a term corresponding to a pixel. A sample may generally represent a pixel or a pixel value, and may represent only a pixel/a pixel value of a luma component, or only a pixel/a pixel value of a chroma component.

A unit may represent a basic unit of image processing. A unit may include at least one of a specific area of a picture and information related to a corresponding area. One unit may include one luma block and two chroma (ex. cb, cr) blocks. In some cases, a unit may be used interchangeably with a term such as a block or an area, etc. In a general case, a MxN block may include a set (or an array) of transform coefficients or samples (or sample arrays) consisting of M columns and N rows.

Herein, "A or B" may refer to "only A", "only B" or "both A and B." In other words, herein, "A or B" may be interpreted as "A and/or B." For example, herein, "A, B or C" may refer to "only A", "only B", "only C" or "any combination of A, B and C)".

A slash (/) or a comma used herein may refer to "and/or." For example, "A/B" may refer to "A and/or B." Accordingly, "A/B" may refer to "only A", "only B" or "both A and B." For example, "A, B, C" may refer to "A, B, or C".

Herein, "at least one of A and B" may refer to "only A", "only B" or "both A and B". In addition, herein, an expression such as "at least one of A or B" or "at least one of A and/or B" may be interpreted in the same way as "at least one of A and B".

In addition, herein, "at least one of A, B and C" may refer to "only A", "only B", "only C", or "any combination of A, B and C". In addition, "at least one of A, B or C" or "at least one of A, B and/or C" may refer to "at least one of A, B and C".

In addition, a parenthesis used herein may refer to "for example." Specifically, when indicated as "prediction (intra prediction)", "intra prediction" may be proposed as an example of "prediction". In other words, "prediction" herein is not limited to "intra prediction" and "intra prediction" may be proposed as an example of "prediction." In addition, even when indicated as "prediction (i.e., intra prediction)", "intra prediction" may be proposed as an example of "prediction."

Herein, a technical feature described individually in one drawing may be implemented individually or simultaneously.

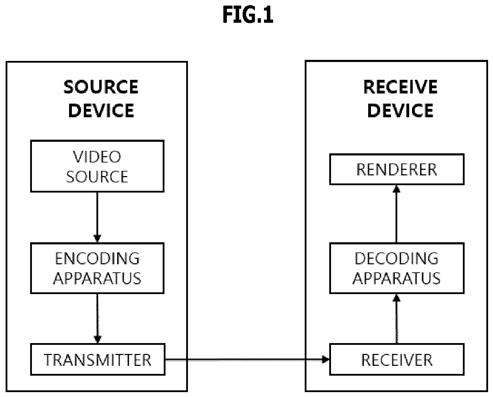

FIG. 1 shows a video/image coding system according to the present disclosure.

Referring to FIG. 1, a video/image coding system may include a first device (a source device) and a second device (a receiving device).

A source device may transmit encoded video/image information or data in a form of a file or streaming to a receiving device through a digital storage medium or a network. The source device may include a video source, an encoding device and a transmission unit. The receiving device may include a reception unit, a decoding device and a renderer. The encoding device may be referred to as a video/image encoding device and the decoding device may be referred to as a video/image decoding device. A transmitter may be included in an encoding device. A receiver may be included in a decoding device. A renderer may include a display unit, and a display unit may be composed of a separate device or an external component.

A video source may acquire a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding device may encode an input video/image. An encoding device may perform a series of procedures such as prediction, transform, quantization, etc. for compression and coding efficiency. Encoded data (encoded video/image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding device.

A decoding device may decode a video/an image by performing a series of procedures such as dequantization, inverse transform, prediction, etc. corresponding to an operation of an encoding device.

A renderer may render a decoded video/image. A rendered video/image may be displayed through a display unit.

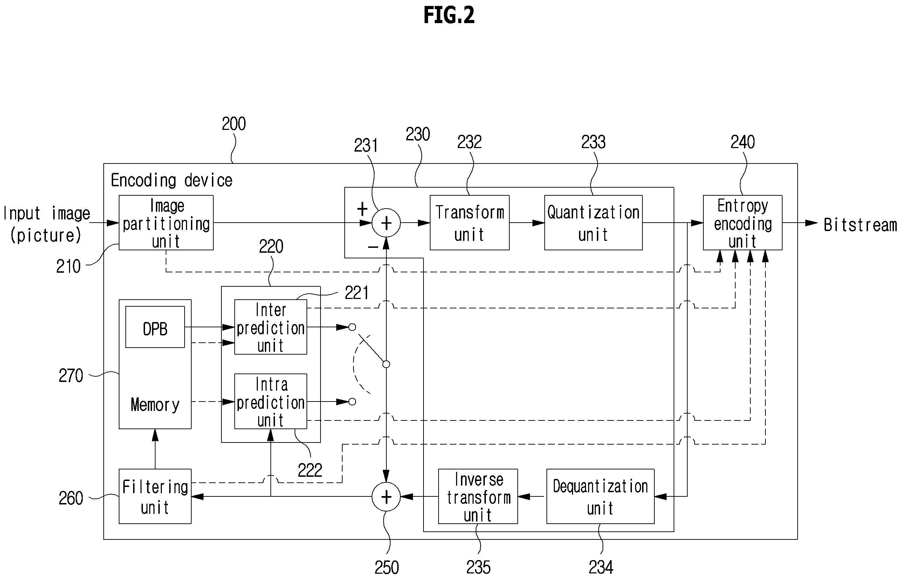

FIG. 2 shows a rough block diagram of an encoding device to which an embodiment of the present disclosure may be applied and encoding of a video/image signal is performed.

Referring to FIG. 2, an encoding device 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconstructor or a reconstructed block generator. The above-described image partitioner 210, predictor 220, residual processor 230, entropy encoder 240, adder 250 and filter 260 may be configured by at least one hardware component (e.g., an encoder chipset or a processor) according to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding device 200 into at least one processing unit. As an example, the processing unit may be referred to as a coding unit (CU). In this case, a coding unit may be partitioned recursively according to a quad-tree binary-tree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc. described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or an area, etc. In a general case, a MxN block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding device 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding device 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a surrounding block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Non-linear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream. Information on the quantized transform coefficients may be referred to as residual information. A quantizer 233 may rearrange quantized transform coefficients in a block form into an one-dimensional vector form based on coefficient scan order, and may generate information on the quantized transform coefficients based on the quantized transform coefficients in the one-dimensional vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form.. The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding device to a decoding device may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding device 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconstructor or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictpr 221. When inter prediction is applied through it, an encoding device may avoid prediction mismatch in an encoding device 200 and a decoding device, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

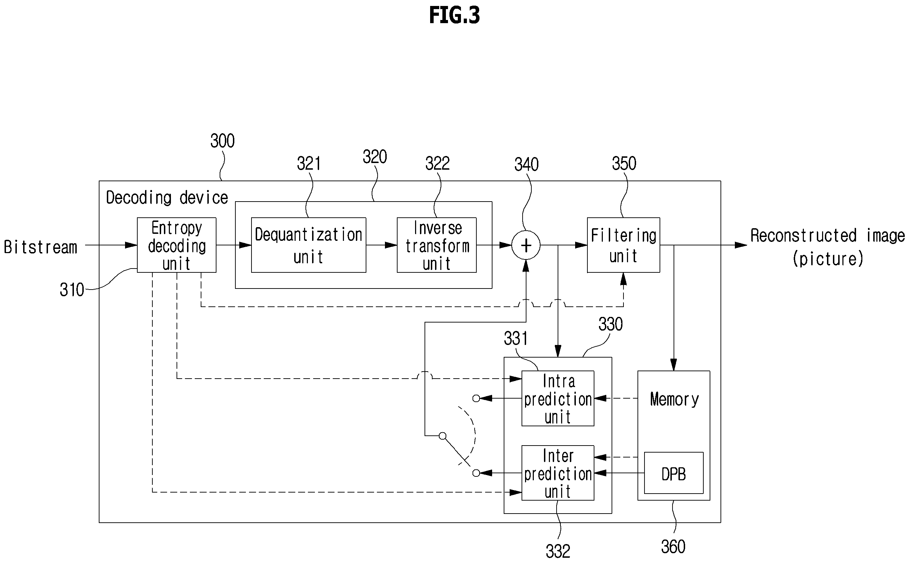

FIG. 3 shows a rough block diagram of a decoding device to which an embodiment of the present disclosure may be applied and decoding of a video/image signal is performed.

Referring to FIG. 3, a decoding device 300 may be configured by including an entropy decoder 310, a residual processor 320, a predictor 330, an adder 340, a filter 350 and a memory 360. A predictor 330 may include an inter predictor 332 and an intra predictor 331. A residual processor 320 may include a dequantizer 321 and an inverse transformer 321.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding device 300 may reconstruct an image in response to a process in which video/image information is processed in an encoding device of FIG. 2. For example, a decoding device 300 may derive units/blocks based on block partition-related information obtained from the bitstream. A decoding device 300 may perform decoding by using a processing unit applied in an encoding device. Accordingly, a processing unit of decoding may be a coding unit, and a coding unit may be partitioned from a coding tree unit or the larget coding unit according to a quad tree structure, a binary tree structure and/or a ternary tree structure. At least one transform unit may be derived from a coding unit. And, a reconstructed image signal decoded and output through a decoding device 300 may be played through a playback device.

A decoding device 300 may receive a signal output from an encoding device of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding device may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a surrounding block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding device may be further configured as an internal/external element of a decoding device 300 or a reception unit may be a component of an entropy decoder 310.

Meanwhile, a decoding device according to this specification may be referred to as a video/image/picture decoding device, and the decoding device may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may rearrange quantized transform coefficients into a two-dimensional block form. In this case, the rearrangement may be performed based on coefficient scan order performed in an encoding device. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconstructor or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter prediction unit 332. A memory 360 may store motion information of a block from which motion information in a current picture is derived (or decoded) and/or motion information of blocks in a pre-reconstructed picture. The stored motion information may be transmitted to an inter predictor 332 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding device 200 may be also applied equally or correspondingly to a filter 350, an inter predictor 332 and an intra predictor 331 of a decoding device 300, respectively.

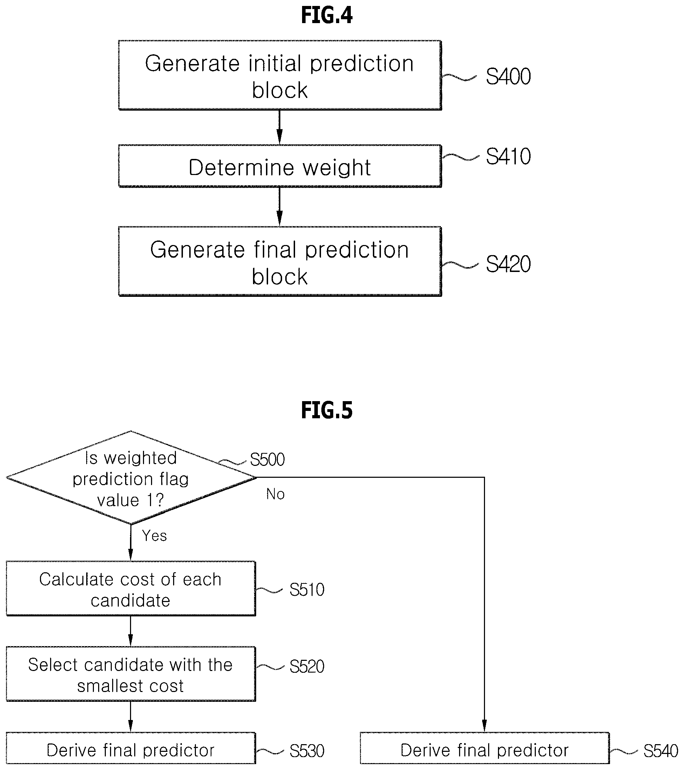

FIG. 4 shows an inter prediction method performed by a decoding device 300 as an embodiment according to the present disclosure.

Referring to FIG. 4, a decoding device may generate an initial prediction block S400. A decoding device may generate a first prediction block of a current block based on a first prediction mode, and may generate a second prediction block of a current block based on a second prediction mode. In the present disclosure, a first prediction block and/or a second prediction block that are weighted summed to generate a final prediction block may be referred to as an initial prediction block. In addition, in the present disclosure, a first prediction block and/or a second prediction block may be referred to as a reference block.

As an example, a first prediction mode may represent prediction in a L0 direction, and a second prediction mode may represent prediction in a L1 direction. In other words, a current block may be a bidirectional prediction block. Alternatively, as an example, a current block may be a unidirectional prediction block. Of course, an embodiment of the present disclosure may be applied when a general inter prediction method such as a merge mode or an AMVP is applied to a current block, and in addition to this, a variety of other inter prediction methods may be applied. As an example, a first prediction mode may be a merge mode, and a second prediction mode may be an AMVP mode.

Alternatively, as an example, a current block may be divided into a plurality of partitions based on a geometric partitioning mode, and the plurality of partitions may include a first partition and a second partition. In this case, a first prediction mode may represent prediction using prediction information of the first partition, and a second prediction mode may represent prediction using prediction information of the second partition. Prediction information of the first partition may be motion information of the first partition or may be intra prediction information of the first partition. Likewise, prediction information of the second partition may be motion information of the second partition or may be intra prediction information of the second partition. In other words, an initial prediction block may be generated based on a GPM or GPM-Intra mode. A GPM-Intra mode represents a mode in which one GPM partition performs inter prediction and another GPM partition performs intra prediction. Initial prediction blocks may be generated by the prediction information of each GPM partition.

A decoding device may determine a weight S410. A decoding device may determine a weight used for a current block based on a weight candidate list including a plurality of predefined weight candidates. In this regard, the present disclosure will describe embodiments regarding a method for determining a weight applied to a current block based on a weight candidate list in detail later.

A decoding device may generate a final prediction block based on a weight determined in S410 S420. A decoding device may generate a final prediction block by weighted summing initial prediction blocks based on a determined weight. In other words, a decoding device may generate a third prediction block of a current block by weighted summing a first prediction block and a second prediction block.

Hereinafter, a method for efficiently performing weighted prediction is described. As a weight according to an embodiment of the present disclosure is a weight used for weighted prediction, it may be collectively referred to as Bi-prediction with CU based Weights (BCW), Uni-prediction with CU based Weights (UCW) and CU based Weights (CW). A weight according to the present disclosure may be applied to bidirectional weighted prediction or may be applied to unidirectional weighted prediction (e.g., local illumination compensation (LIC)). In describing the following embodiments, for convenience of a description, a case in which bidirectional weighted prediction is performed is mainly described, but the present disclosure is not limited thereto. Substantially, the same method may also be applied to unidirectional weighted prediction.

In an embodiment, a weight may be derived from a weight candidate list. A weight candidate list may include a plurality of weight candidates and may be predefined in an encoding/decoding device. A weight candidate may be a weight set (i.e., a first weight and a second weight) representing weights applied to each bidirectional prediction block, or may be a weight applied to a prediction block in either direction. When only a weight applied to a prediction block in one direction is derived from a weight candidate list, a weight applied to a prediction block in the other direction may be derived based on a weight derived from a weight candidate list. For example, a weight applied to a prediction block in the other direction may be derived by subtracting a weight derived from a weight candidate list from a predetermined value. In the present disclosure, a weight candidate list may be referred to as a candidate list, a weight list, a weight factor list, a weight group, a weight candidate group (candidate group), a weight factor group, etc.

In addition, in an embodiment, a weight index indicating a weight used for weighted prediction of a current block in a weight candidate list may be derived. In the present disclosure, a weight index may be referred to as bcw_idx or a bcw index. A weight index may be derived in the same manner as in an encoding device in a decoding device, or may be signaled to a decoding device through a bitstream from an encoding device.

### Embodiment 1

In an embodiment of the present disclosure, a method for reordering a weight index is described to decrease signaling overhead of a weight index and increase compression efficiency. In this embodiment, it is described on the assumption that a first prediction block is a L0 prediction block and a second prediction block is a L1 prediction block, but the present disclosure is not limited thereto. For example, a first prediction block may be an intra prediction block and a second prediction block may be an inter prediction block. Alternatively, for example, a first prediction block may be an intra prediction block of a first partition and a second prediction block may be an inter prediction block of a second partition. Alternatively, for example, a first prediction block may be an inter prediction block of a first partition and a second prediction block may be an inter prediction block of a second partition.

In an embodiment, a weight may be determined or signaled in a unit of a CU. As an example, under a low-delay condition (or a low-delay B-picture condition), a weight (w1) candidate group of L1 may be defined (or determined) as {4, 5, 3, 10, -2} and a weight w0 of L0 may be defined as (8-w1). Under a non-low-delay condition (or a random access condition), considering trade-off between complexity and performance, a weight candidate group of L1 may be defined as {4, 5, 3}, which includes three weights. A weight w0 of L0 may be defined as (8-w1) in the same way.

In an embodiment, a final prediction sample considering a weight in each direction may be calculated as in the following Equation 1. pbSamples[ x ][ y ] = Clip3( 0, (1 << bitDepth ) - 1, ( w0 * predSamplesL0[ x ][ y ] + w1 * predSamplesL1[ x ][ y ] + offset3 ) >> ( shift1 + 3 ) )

In Equation 1, offset3 is a variable representing an offset, and shift1 is a variable for configuring a shift value of a right shift operation. Equation 1 above may be simply expressed as in the following Equation 2. pbSamples [ x ][ y ] = (w0 * pred0[ x ][ y ] + w1 * pred1[ x ][ y ] + offset) >> shift

As an example, in Equation 2, variable offset may be defined as (1 << (1+2)) and variable shift may be defined as (1+ 3). If the sum of weights in both directions is 16, offset may be defined as (1 << (1+3)) and shift may be applied as (1+4).

In terms of a decoding device, a cost may be calculated for each weight candidate belonging to a weight candidate list, and weight candidates belonging to a weight candidate list may be reordered based on a calculated cost. A cost calculation method will be described in detail later. As an example, a decoding device may reorder weight candidates belonging to a weight candidate list in ascending order of calculated costs.

A weight for the weighted sum of prediction blocks may be determined based on a reordered candidate list and index information. As an example, the index information is encoded based on a reordered candidate list, and may be signaled through a bitstream. Alternatively, as an example, the index information may be derived from a spatially or temporally neighboring block. The index information may indicate any one of the weight candidates in a reordered candidate list.

As an example, it is assumed that a candidate list includes three weight candidates, i.e., first to third weight candidates, and an index of 0 to 2 is allocated to first to third weight candidates, respectively.

For first to third weight candidates, costs of cost0 to cost2 may be calculated, respectively. In this case, when calculated costs are ordered in ascending order, it is assumed that they are ordered in the order of cost1, cost2 and cost0. In this case, if weight candidates are reordered in ascending order of costs, the candidate list may be reordered in the order of a second weight candidate, a third weight candidate and a first weight candidate. In other words, an index of 0 may be allocated to a second weight candidate, an index of 1 may be allocated to a third weight candidate, and an index of 2 may be allocated to a first weight candidate.

A value of the index information is an integer in the range of 0 to 2, and a weight candidate indicated by the index information may be configured as a weight for the weighted sum of a prediction block. In other words, when a value of the index information is 0, a second weight candidate allocated with an index of 0 in ae reordered candidate list may be configured as a weight for the weighted sum of a prediction block. Alternatively, when a value of the index information is 1, a third weight candidate allocated with an index of 1 in a reordered candidate list may be configured as a weight for the weighted sum of a prediction block. Alternatively, when a value of the index information is 2, a first weight candidate allocated with an index of 2 in a reordered candidate list may be configured as a weight for the weighted sum of a prediction block.

Alternatively, as an example, it is assumed that a candidate list includes five weight candidates, i.e., first to fifth weight candidates, and an index of 0 to 4 is allocated to first to fifth weight candidates, respectively.

Costs of cost0 to cost4 may be calculated for first to fifth weight candidates, respectively. In this case, when calculated costs are ordered in ascending order, it is assumed that they are ordered in the order of cost1, cost2, cost0, cost3 and cost4. In this case, when weight candidates are reordered in ascending order of the costs, the candidate list may be reordered in the order of a second weight candidate, a third weight candidate, a first weight candidate, a fourth weight candidate and a fifth weight candidate. In other words, an index of 0 may be allocated to a second weight candidate, an index of 1 may be allocated to a third weight candidate, an index of 2 may be allocated to a first weight candidate, an index of 3 may be allocated to a fourth weight candidate, and an index of 4 may be allocated to a fifth weight candidate.

The index information may be encoded for N top weight candidates belonging to a reordered candidate list. If N is 3, a value of index information is an integer in the range of 0 to 2, and it may indicate any one of three top weight candidates belonging to a reordered candidate list. A weight candidate indicated by the index information may be configured as a weight for the weighted sum of a prediction block. However, it is just an example, and N may be 2 or 4.

Alternatively, costs may be calculated for N top weight candidates among the five weight candidates belonging to the candidate list, respectively, and a cost may not be calculated for the remaining weight candidates. Hereinafter, for convenience of a description, it is assumed that N is 3, but it is not limited thereto, and N may be 2 or 4.

For three top weight candidates, i.e., first to third weight candidates, costs of cost0 to cost2 may be calculated, respectively. In this case, when calculated costs are ordered in ascending order, it is assumed that they are ordered in the order of cost1, cost2 and cost0. In this case, when weight candidates are reordered in ascending order of the costs, the candidate list may be reordered in the order of a second weight candidate, a third weight candidate, a first weight candidate, a fourth weight candidate and a fifth weight candidate.

The index information may be encoded for N top weight candidates that a cost is calculated. If N is 3, a value of index information is an integer in the range of 0 to 2, and it may indicate any one of three top weight candidates belonging to a reordered candidate list. A weight candidate indicated by the index information may be configured as a weight for the weighted sum of a prediction block.

Even under a low-delay condition, cost-based index reordering may be performed for each candidate in a determined candidate list. As an example, reordering may be performed for more candidates than the number of candidates for index signaling, and index signaling may be performed for a specific number of candidates with a small cost among the reordered candidates. Hereinafter, a cost calculation method will be described.

In terms of a decoding device, a cost may be calculated for each weight candidate belonging to a weight candidate list. As an example, the weight candidate list may be ordered based on the weight candidates. Alternatively, as an example, one weight candidate having the minimum cost among the costs calculated based on the weight candidates may be selected. The selected one weight candidate may be configured as a weight for the weighted sum of a prediction block.

Here, a cost may be calculated for all weight candidates belonging to a weight candidate list, or a cost may be calculated only for N top weight candidates belonging to a weight candidate list. N is an integer of 2, 3, 4 or more, and may be equal to or less than the total number of weight candidates belonging to a weight candidate list.

The cost may be calculated as the sum of absolute difference (SAD) between one or more samples in a template region of a current block and one or more samples in a template region of a reference block. A template region may be defined as a left and/or top region.

Specifically, when a current block is encoded by bidirectional prediction, a current block may have a reference block in a L0 direction and a reference block in a L1 direction. In this case, a SAD may be calculated based on a template region adjacent to a reference block in a L0 direction, a template region adjacent to a reference block in a L1 direction and a template region adjacent to a current block. Samples of template regions in the L0 and L1 directions may be generated by applying corresponding weight candidates to reconstructed samples of reference pictures in L0 and L1 directions, respectively. A reference block in L0 and L1 directions may be specified by using L0 motion information (or motion vector) and L1 motion information (or motion vector), respectively.

After applying a corresponding weight value to left and top template regions adjacent to a L0 reference block and left and top template regions adjacent to a L1 reference block to generate a final template, a SAD with left and top template regions of a current block may be calculated.

In an embodiment, a template region may consider only a left or top region by considering availability by a boundary of a picture, a slice, a tile, a CTU, etc. In addition, a region and a size of a template may vary depending on a shape and a size of a block. As an example, SAD values corresponding to a plurality of weight candidates may be calculated in a weight candidate list, and in this case, the SAD values may be calculated based on a reference template region and a template region of the current block. Here, the reference template region may be derived by weighted summing a template region of a L0 reference block and a template region of a L1 reference block based on a corresponding weight candidate. As an example, a SAD may be used to calculate a cost of a template region. A general SAD calculation formula may be defined as in the following Equation 3. Predictor, tP = (w0 * tP0 + w1 * tP1 + offset) > > (shift) SAD = Σ|tC - tP|

In Equation 3, tP0 and tP1 represent a sample value of left and top template regions of L0 and L1, respectively, and tC represents a sample value of left and top templates of a current block. In addition, offset and shift in Equation 3 may be omitted or may be partially changed and applied for the convenience of calculation, respectively, as offset and shift variables.

Alternatively, as an example, in addition to the above-described SAD, various methods such as a Mean Reduced SAD (MRSAD), a High-frequency removed SAD, etc. may be used for cost calculation. For example, a MRSAD may be derived by using the following Equation 4. tP = (w0 * tP0 + w1 * tP1 + offset) > > shift delta = (Σ (tC - tP)) / (w x h) SAD = Σ|(tC - tP - delta |

In addition, a High-frequency removed SAD may be derived by using the following Equation 5. tmp = (2 * tC) << 3 - (w0 * tP0 + w1 * tP1) SAD = Clip(Σ|( tmp + offset) >> shift|)

Referring to Equation 5, it is assumed that the sum of w0 and w1 is 8. In order to calculate a cost by compensating for a weight of w0 and w1 applied to a reference block in a template region of a current block, a left shift operation may be applied by 3. In addition, offset and shift variables may be reflected on a SAD calculation process to adjust the range of SAD values.

As described above, variables offset and shift may be derived (or determined, or configured) based on the sum of w0 and w1, so they may be changed according to a weight value. In addition, in a SAD calculation process described, the order in which offset and shift are applied may also be changed. For example, for Equation 5 for the above-described high-frequency removed SAD, a partial calculation process may be changed as in the following Equation 6 or 7. tmp = (2 * tC) -( (w0 * tP0 + w1 * tP1 + offset) > > shift) SAD = Σ|tmp| tmp = (2 * tC)<<3 -w0 * tP0 + w1 * tP1 SAD = Σ|tmp|

A change of Equation 5 to Equation 6 or 7 may also be applied to other SAD calculation formulas described above in the same or similar manner. In addition, a cost calculation method described above may be applied to all samples in a template region of a corresponding block, or may be applied to some samples in a template region.

Alternatively, even when a current block is encoded by bidirectional prediction, a SAD may be calculated based on a template region adjacent to a reference block in any one of a L0 or L1 direction and a template region adjacent to a current block. Any one of the L0 or L1 direction may be a direction that is predefined equally for an encoding device and a decoding device.

A template region for calculating the cost may be a neighboring region adjacent to a current block and/or a reference block. As an example, the template region may include at least one of a top neighboring region, a left neighboring region, a top-left neighboring region, a bottom-left neighboring region or a top-right neighboring region.

The template region may be a region that is pre-defined equally for an encoding device and a decoding device to calculate the cost. Alternatively, the template region may be variably determined based on information specifying a position of the template region. In this case, information specifying a position of a template region may be signaled through a bitstream. Alternatively, a position and/or a size of a template region may be determined based on at least one of whether a current block is positioned on a boundary of at least one of a picture, a slice, a tile or a coding tree unit, a size of a current block (e.g., a width, a height, a ratio of a width and a height, a product of a width and a height), a shape of a current block, a division type of a current block, a prediction mode of a neighboring region or the availability of a neighboring region.

As an example, when a current block is positioned at a top boundary of a coding tree unit, at least one of a top neighboring region, a top-left neighboring region or a top-right neighboring region of a current block may not be referred to for calculating a cost. When a width of a current block is greater than a height, a top neighboring region may be referred to for calculating a cost, and a left neighboring region may not be referred to for calculating a cost. Conversely, when a width of a current block is smaller than a height, a left neighboring region may be referred to for calculating a cost, and a top neighboring region may not be referred to for calculating a cost.

When a current block is generated through horizontal block division, a top neighboring region may not be referred to for calculating a cost. Conversely, when a current block is generated through vertical block division, a left neighboring region may not be referred to for calculating a cost. When a neighboring region of a current block is encoded in an intra mode, a corresponding neighboring region may not be referred to for calculating a cost. However, it is not limited thereto, and a corresponding neighboring region may be referred to for calculating a cost regardless of a prediction mode of a neighboring region.

The template region may be composed of M sample lines. Here, M may be an integer of 1, 2, 3, 4 or more. The number of sample lines configuring a template region may be the same regardless of a position of a neighboring region described above, or may be different according to a position of a neighboring region. A cost may be calculated based on all samples belonging to the template region. Alternatively, a cost may be calculated by using only a sample line at a predetermined position within the template region. Alternatively, a cost may be calculated based on all or some samples belonging to a sample line at the predetermined position. A position of a sample line and/or a sample used for cost calculation within the template region may be determined based on at least one of whether a current block is positioned on a boundary of a picture, a slice, a tile or a coding tree unit, a size of a current block, a shape of a current block, a division type of a current block, a prediction mode of a neighboring region or the availability of a neighboring region. Alternatively, information for specifying a position of a sample line for the cost calculation may be signaled through a bitstream.

### Embodiment 2

In an embodiment of the present disclosure, a method for decreasing signaling overhead of a weight index and increasing compression efficiency is proposed. As described above, three weight candidate groups may be defined for random access and five weight candidate groups may be defined for low-delay. In the present disclosure, a weight candidate group represents a group including weight candidates, and may be referred to as a weight candidate list. In this embodiment, it is described by assuming a case in which signaling of a weight index is required, but the present disclosure is not limited thereto. In other words, a weight index may be signaled through a bitstream or may be derived by a decoding device.

As an example, a weight index specifying a weight candidate used for inter prediction of a current block within a weight candidate group may be signaled. In this case, a method for improving signaling overhead according to index signaling will be described below as an example. As an example, a syntax as in Table 1 below may be defined.

**[Table 1]**

| | |
|---|---|
| if( sps_bcw_enabled_flag && inter_pred_idc[ x0 ][ y0 ] = = PRED_BI && | |
| luma_weight_l0_flag[ ref_idx_l0 [ x0 ][ y0 ] ] = = 0 && | |
| luma_weight_l1_flag[ ref_idx_l1 [ x0 ][ y0 ] ] = = 0 && | |
| chroma_weight_l0_flag[ ref_idx_l0 [ x0 ][ y0 ] ] = = 0 && | |
| chroma_weight_l1_flag[ ref_idx_l1 [ x0 ][ y0 ] ] = = 0 && | |
| cbWidth * cbHeight >= 256 ) | |
| **bcw_flag**[ x0 ][ y0 ] | ae(v) |

Referring to Table 1, weight-based weighted prediction according to the present disclosure may be applied when weighted prediction is activated in a current sequence, a current block is a bidirectional prediction block, explicit weighted prediction is not applied and a block size is greater than or equal to a predefined threshold value, as in a syntax of Table 1. If the predefined condition is satisfied, bcw_flag may be signaled.

In the present disclosure, bcw_flag may represent a syntax element indicating whether weighted prediction is performed, and may be referred to as a weighted prediction flag. In other words, whether weighted prediction is applied may be determined by using bcw_flag. When bcw_flag is 1, a weight may be determined by using a derivation method proposed in the present disclosure. When bcw_flag is 0, weighted prediction is not applied, and a final prediction block may be generated by averaging initial prediction blocks.

According to an embodiment of the present disclosure, if weighted prediction is not applied according to a value of bcw_flag, averaging may be performed. However, in the present disclosure, weighted prediction may be a concept separated from averaging, or may be a concept covering averaging. In other words, even when weighted prediction is applied, if a weight value applied to two initial prediction blocks is the same, averaging may be performed. In other words, a weight index of weighted prediction may indicate a case in which a weight included in a weight set is the same, or may indicate a case in which a weight included in a weight set is different.

In addition, as an example, the above-described method may be changed and applied as in Table 2 below by considering trade-off between compression performance and computational complexity.

**[Table 2]**

| | |
|---|---|
| if( sps_bcw_enabled_flag && ((inter_pred_idc[ x0 ][ y0 ] = = PRED_BI && | |
| luma_weight_l0_flag[ ref_idx_l0 [ x0 ][ y0 ] ] = = 0 && | |
| luma_weight_l1_flag[ ref_idx_l1 [ x0 ][ y0 ] ] = = 0 && | |
| chroma_weight_l0_flag[ ref_idx_l0 [ x0 ][ y0 ] ] = = 0 && | |
| chroma_weight_l1_flag[ ref_idx_l1 [ x0 ][ y0 ] ] = = 0 ) ∥ | |
| (inter_pred_idc[ x0 ][ y0 ] = = PRED_L0 && | |
| luma_weight_l0_flag[ ref_idx_l0 [ x0 ][ y0 ] ] = = 0 && | |
| chroma_weight_l0_flag[ ref_idx_l0 [ x0 ][ y0 ] ] = = 0 &&) ∥ | |
| (inter_pred_idc[ x0 ][ y0 ] = = PRED_L1 && | |
| luma_weight_l1_flag[ ref_idx_l1 [ x0 ][ y0 ] ] = = 0 && | |
| chroma_weight_l1_flag[ ref_idx_l1 [ x0 ][ y0 ] ] = = 0 &&)) && | |
| cbWidth * cbHeight >= 256 ) | |
| **bcw_flag**[ x0 ][ y0 ] | ae(v) |

Referring to Table 2, bcw_flag may be signaled even when weighted prediction is activated in a current sequence, a current block is a unidirectional prediction block and explicit weighted prediction in a corresponding direction (L0 or L1) is not applied. In other words, according to Table 2, a weighted sum for a prediction block or a reference block may be performed even when unidirectional prediction is performed. Accordingly, in the present disclosure, even when unidirectional prediction is performed to increase weight determination efficiency used for weighted prediction even in this cases, weight-based weighted prediction according to the present disclosure may be applied.

In addition, as an example, bcw_flag may be signaled based on a syntax as in Table 3 below.

**Table 3**

| | |
|---|---|
| if( sps_bcw_enabled_flag && inter_pred_idc[ x0 ][ y0 ] = = PRED_BI && | |
| cbWidth * cbHeight >= 256 ) | |
| **bcw_flag**[ x0 ][ y0 ] | ae(v) |

Referring to Table 3, when weighted prediction is activated in a current sequence, a current block is a bidirectional prediction block and a block size is greater than a predefined threshold value, bcw_flag may be signaled. In other words, explicit weighted prediction may not be considered for bcw_flag signaling.

In addition, as an example, bcw_flag may be signaled based on a syntax as in Table 4 below.

**[Table 4]**

| | |
|---|---|
| if( sps_bcw_enabled_flag && cbWidth * cbHeight >= 256 ) | |
| **bcw_flag**[ x0 ][ y0 ] | ae(v) |

Referring to Table 4, when weighted prediction is activated in a current sequence and a block size is greater than a predefined threshold value, bcw_flag may be signaled. In other words, whether it is a bidirectional prediction block and explicit weighted prediction may not be considered for bcw_flag signaling.

In addition, as an example, bcw_flag may be signaled based on a syntax as in Table 5 below.

**[Table 5]**

| | |
|---|---|
| if( sps_bcw_enabled_flag ) | |
| **bcw_flag**[ x0 ][ y0 ] | ae(v) |

Referring to Table 4, when weighted prediction is activated in a current sequence, bcw_flag may be signaled. In other words, bcw_flag may be signaled without considering whether it is a bidirectional prediction block, whether explicit weighted prediction is applied or whether a block size is greater than or equal to a predefined threshold value.

### Embodiment 3

An embodiment of the present disclosure proposes a method for deriving a weight index without separate signaling in order to decrease signaling overhead of a weight index and increase compression efficiency.

In other words, a weight index and/or a weighted prediction flag may be derived by a decoding device without being signaled by an encoding device. As an example, when a condition as in Table 6 below is satisfied, a weight index may be derived by a decoding device.

It may be derived when the following condition is satisfied in a decoding process.

**[Table 6]**

| |
|---|
| sps_bcw_enabled_flag && |
| inter_pred_idc[ x0 ][ y0 ] = = PRED_BI && |
| luma_weight_l0_flag[ ref_idx_l0 [ x0 ][ y0 ] ] = = 0 && |
| luma_weight_l1_flag[ ref_idx_l1 [ x0 ][ y0 ] ] = = 0 && |
| chroma_weight_l0_flag[ ref_idx_l0 [ x0 ][ y0 ] ] = = 0 && |
| chroma_weight_l1_flag[ ref_idx_l1 [ x0 ][ y0 ] ] = = 0 && |
| cbWidth * cbHeight >= threshold |

Referring to Table 6, when weight-based weighted prediction is activated, a current block is a bidirectional prediction block, explicit weighted prediction is not applied to both directions and a size of a current block is greater than or equal to a predetermined threshold value, a weight index may be derived. As an example, a threshold value may be configured as 64, 128, 256, 512, etc., and a value thereof may be changed and applied.

As an example, considering trade-off between compression performance and computational complexity, a method described above may be applied as in Table 7 below.

**[Table 7]**

| |
|---|
| sps_bcw_enabled_flag && |
| ((inter_pred_idc[ x0 ][ y0 ] = = PRED_BI && |
| luma_weight_l0_flag[ ref_idx_l0 [ x0 ][ y0 ] ] = = 0 && |
| luma_weight_l1_flag[ ref_idx_l1 [ x0 ][ y0 ] ] = = 0 && |
| chroma_weight_l0_flag[ ref_idx_l0 [ x0 ][ y0 ] ] = = 0 && |
| chroma_weight_l1_flag[ ref_idx_l1 [ x0 ][ y0 ] ] = = 0 ) ∥ |
| (inter_pred_idc[ x0 ][ y0 ] = = PRED_L0 && |
| luma_weight_l0_flag[ ref_idx_l0 [ x0 ][ y0 ] ] = = 0 && |
| chroma_weight_l0_flag[ ref_idx_l0 [ x0 ][ y0 ] ] = = 0 &&) ∥ |
| (inter_pred_idc[ x0 ][ y0 ] = = PRED_L1 && |
| luma_weight_l1_flag[ ref_idx_l1 [ x0 ][ y0 ] ] = = 0 && |
| chroma_weight_l1_flag[ ref_idx_l1 [ x0 ][ y0 ] ] = = 0 &&)) && |
| cbWidth * cbHeight >= threshold |

Referring to Table 7, when weight-based weighted prediction is activated, a current block is a unidirectional prediction block, explicit weighted prediction in a corresponding direction is not applied and a size of a current block is greater than or equal to a predetermined threshold value, a weight index may be derived. As an example, a threshold value may be configured as 64, 128, 256, 512, etc., and a value thereof may be changed and applied.

In addition, as an example, it may be changed and applied as in Table 8 below.

**[Table 8]**

| |
|---|
| sps_bcw_enabled_flag && inter_pred_idc[ x0 ][ y0 ] = = PRED_BI && |
| cbWidth * cbHeight >= threshold |

Referring to Table 8, when weight-based weighted prediction is activated, a current block is a bidirectional prediction block and a size of a current block is greater than or equal to a predetermined threshold value, a weight index may be derived. As an example, a threshold value may be configured as 64, 128, 256, 512, etc., and a value thereof may be changed and applied.

In addition, as an example, it may be changed and applied as in Table 9 below.

**[Table 9]**

| |
|---|
| sps_bcw_enabled_flag && cbWidth * cbHeight >= threshold |

Referring to Table 9, when weight-based weighted prediction is activated and a size of a current block is greater than or equal to a predetermined threshold value, a weight index may be derived. As an example, a threshold value may be configured as 64, 128, 256, 512, etc., and a value thereof may be changed and applied. In other words, a weight index may be derived without considering whether explicit weighted prediction or bidirectional prediction is performed.

In addition, as an example, it may be changed and applied as in Table 10 below.

**[Table 10]**

| |
|---|
| sps_bcw_enabled_flag |

Referring to Table 10, when weight-based weighted prediction is activated, a weight index may be derived. In other words, a weight index may be derived without considering whether explicit weighted prediction or bidirectional prediction is performed or a size of a block.

### Embodiment 4

According to an embodiment of the present disclosure, a weight used for weighted prediction may be derived based on a weighted prediction flag. It is described in detail by referring to FIG. 5 below.

FIG. 5 is a flowchart showing a weight determination method based on a weighted prediction flag according to an embodiment of the present disclosure.

Referring to FIG. 5, it is described by assuming that a weighted prediction flag is determined before performing an embodiment according to FIG. 5. As an embodiment, a weighted prediction flag may be signaled through a bitstream from an encoding device according to Embodiment 2 described above, or may be derived by a decoding device.

Referring to FIG. 5, a decoding device may confirm whether a weighted prediction flag value is 1 S500. As an example, a weighted prediction flag may be signaled or derived in a unit of a coding unit, a prediction unit or a transform unit.

When a weighted prediction flag value is 1, a decoding device may calculate a cost for each candidate in a predefined weight candidate list S510. A template region-based cost calculation method described in FIG. 4 above may be applied.

A decoding device may select a candidate having the smallest cost in a weight candidate list S520. A candidate having the smallest cost may be referred to as a candidate having an optimal cost or a candidate having the lowest cost.

A decoding device may generate a final prediction block (or prediction sample) by weighted summing a prediction block with a weight (or a weight factor) of a selected candidate S530. As an example, a method described in Equation 1 or 2 above may be applied.

As an example, when weighted prediction is applied, offset in the process of generating a final prediction block may be configured as (1 << (1+2)) and shift may be configured as (1+3). However, it is an example, and this embodiment is not limited thereto. offset and shift in the process of calculating an average between prediction blocks of L0 and L1 may be configured as 1, respectively, and considering that the sum of weights applied to L0 and L1 prediction blocks for applying weighted prediction is 8, offset and shift may be configured as 4 and 3, respectively. Accordingly, when the sum of weights of L0 and L1 is changed, corresponding offset and shift may be changed by considering this.

If a weighted prediction flag value is 0, a decoding device may generate a final prediction block by averaging two prediction blocks S540. As described above, when weighted prediction is performed according to a weighted prediction flag, a weighted sum may be performed, and when weighted prediction is not performed, averaging may be performed. In other words, according to a weighted prediction flag, a weight in a weight set may be determined as a different value, or may be determined (i.e., averaged) as the same value.

As an example, a weight candidate list may be configured as in Table 11 below.

**[Table 11]**

| Index | W0 | W1 |
|---|---|---|
| 0 | 3 | 5 |
| 1 | 5 | 3 |
| 2 | -2 | 10 |
| 3 | 10 | -2 |

Referring to Table 11, in an embodiment, a weight candidate list may include four weight candidates (or weight sets). As in Table 11, an index may be allocated to each weight candidate. As an embodiment, a weight candidate list in Table 11 may perform template-based cost calculation in the same way in an encoding device and a decoding device.

### Embodiment 5

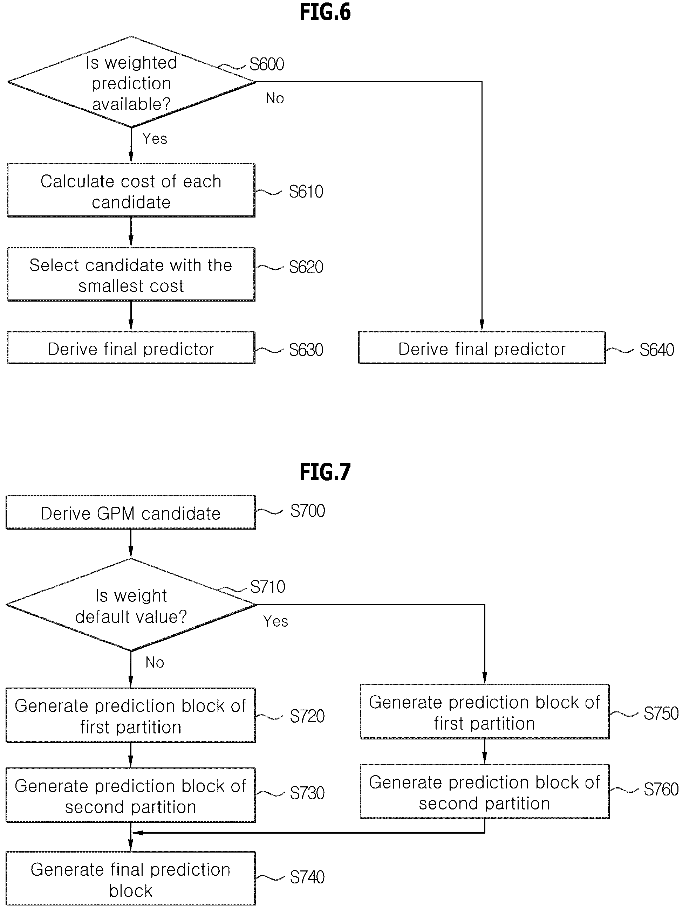

According to an embodiment of the present disclosure, a weight index or a weighted prediction flag for weighted prediction may be derived by a decoding device without being signaled from an encoding device An encoding device and a decoding device may derive a weight index or a weighted prediction flag in the same manner. A weight determination process according to this embodiment is described by referring to FIG. 6 below.

FIG. 6 is a flowchart showing a weight determination method for weighted prediction according to an embodiment of the present disclosure.

Referring to FIG. 6, a decoding device may determine whether weighted prediction is available S600. As an example, whether weighted prediction is available, as described in Embodiment 3, may be determined in a unit of a block based on at least one of a SPS, whether explicit weighted prediction is applied, whether bidirectional prediction is performed or a block size. As an example, a unit of a block may be a unit of a coding unit, a prediction unit or a transform unit.

When weighted prediction is available, a decoding device may calculate a cost for each candidate in a predefined weight candidate list S610. A template-based cost calculation method described in FIG. 4 above may be applied.

A decoding device may select a candidate having the smallest cost in a weight candidate list S620. A decoding device may generate a final prediction block (or prediction sample) by weighted summing a prediction block with a weight (or a weight factor) of a selected candidate S630. In this case, as an example, a method described in Equation 1 or 2 above may be applied.

As an example, when weighted prediction is applied, offset in the process of generating a final prediction block may be configured as (1 << (1+2)) and shift may be configured as (1+3). However, it is an example, and this embodiment is not limited thereto. offset and shift in the process of calculating an average between prediction blocks of L0 and L1 may be configured as 1, respectively, and considering that the sum of weights applied to L0 and L1 prediction blocks for applying weighted prediction is 8, offset and shift may be configured as 4 and 3, respectively. Accordingly, when the sum of weights of L0 and L1 is changed, corresponding offset and shift may be changed by considering this.

When weighted prediction is not available, a decoding device may generate a final prediction block by averaging two prediction blocks S640.

As an example, a weight candidate list may be configured as in Table 12 below.

**[Table 12]**

| Index | W0 | W1 |
|---|---|---|
| 0 (default) | 4 | 4 |
| 1 | 3 | 5 |
| 2 | 5 | 3 |
| 3 | -2 | 10 |
| 4 | 10 | -2 |

Referring to Table 12, in an embodiment, a weight candidate list may include five weight candidates (or weight set). As in Table 12, an index may be allocated to each weight candidate. As an embodiment, a weight candidate list in Table 12 may perform template-based cost calculation in the same way in an encoding device and a decoding device. In this case, when an index value is 0, it is a case in which a weight applied to a prediction block of L0 is the same as a weight applied to a prediction block of L1, which may represent a case in which averaging for a prediction block is performed.

### Embodiment 6

According to an embodiment of the present disclosure, in deriving a weight of weighted prediction, a weight candidate list may be configured (or determined) based on an inter prediction mode, whether bidirectional prediction is performed or a size of a block.

Inter prediction may include various prediction methods other than a general merge mode or an AMVP mode. For example, inter prediction may include at least one of an affine prediction mode, a template matching mode or an AMVP-MERGE mode. A weight candidate list for these various inter prediction methods may be configured to improve prediction performance.

As an example, an affine prediction mode and/or a template matching mode may be selected by considering the deformation or relatively fine motion of a block. Accordingly, other than a candidate included in the above-described weight candidate list, a candidate reflecting the deformation or relatively fine change of a block described above may be further considered. For example, as in Table 13 below, a weight candidate list for an affine prediction mode and/or a template matching mode may be defined.

**[Table 13]**

| Index | W0 | W1 |
|---|---|---|
| 0 | 8 | 8 |
| 1 | 9 | 7 |
| 2 | 7 | 9 |
| 3 | 10 | 6 |
| 4 | 6 | 10 |

Referring to Table 13, a weight candidate having a relatively small change in a weight between L0 and L1 may be considered. Table 13 is an example, which shows that in addition to a merge mode or an AMVP mode, a separate weight candidate list with a relatively small variation between weight candidates may be configured, and this embodiment is not limited thereto. In addition, when a weighted prediction flag is signaled, a first candidate in Table 13 may be excluded from a weight candidate list.

When an inter prediction mode of the current block is an affine prediction mode or a template matching mode, a variation in a weight value between the plurality of predefined weight candidates included in the weight candidate list may be configured to have a relatively smaller value than a variation in a weight value between a plurality of weight candidates included in a weight candidate list in a merge mode or an AMVP mode.

AMVP-MERGE represents a method in which a prediction block (or a reference block) is derived by applying an AMVP mode to any one direction of L0 and L1 and a prediction block is derived by applying a merge mode to the other direction. The weighted sum of two derived prediction blocks may be performed. As an embodiment, a weight candidate list for AMVP-MERGE may be configured. Alternatively, when AMVP-MERGE is applied, a weight candidate list for an AMVP mode or a merge mode may be configured. Similarly, a weight candidate list for a unidirectional prediction block may be configured. For example, a weight candidate list for AMVP-MERGE and/or an unidirectional prediction block as in Table 14 may be defined.

**[Table 14]**

| Index | WX (ex.1) | WX (ex.2) |
|---|---|---|
| 0 | 16 | 32 |
| 1 | 15 | 31 |
| 2 | 17 | 33 |
| 3 | 14 | 30 |
| 4 | 18 | 34 |
| | offset 8, shift 4 | offset 16, shift 5 |

In addition, a weight candidate list may be configured according to a size of a block. As an example, considering the increased complexity for a small block, a cost may be calculated for a small number of candidates. Alternatively, a candidate configuration and the number of candidates of a weight candidate list may be different according to an inter prediction mode, whether bidirectional prediction is performed or a size of a block.

### Embodiment 7

According to an embodiment of the present disclosure, in deriving a weight of weighted prediction, a weight candidate list may be configured (or determined) based on an inter prediction mode, whether bidirectional prediction is performed or a size of a block. In deriving a weight of weighted prediction, a weight may be selected based on a different threshold value according to an inter prediction mode, whether bidirectional prediction is performed or a size of a block. As an example, a weight candidate list as in Table 15 below may be defined.

**[Table 15]**

| Index | W0 | W1 |
|---|---|---|
| 0 | 8 | 8 |
| 1 | 9 | 7 |
| 2 | 7 | 9 |
| 3 | 10 | 6 |
| 4 | 6 | 10 |
| 5 | 11 | 5 |
| 6 | 5 | 11 |
| 7 | -4 | 20 |
| 8 | 20 | -4 |

When a predefined weight candidate list as in Table 15 exists, a weight candidate may be determined by using a threshold value as follows. Specifically, a decoding device may calculate a cost of each candidate for a candidate existing in a weight candidate list and select a candidate with the lowest cost among them. If an index of a selected candidate is not 0 (a default weight), i.e., if a selected candidate is not a weight set where two weights are the same, a difference value between a cost of a selected candidate and a cost of a default weight candidate may be calculated.

When a difference value between a cost of a selected candidate and a cost of a default weight candidate is greater than a predefined threshold value or is greater than or equal to a predefined threshold value, a weighted sum may be performed by using a weight of a selected candidate. Otherwise, weighted prediction may be performed by using a default weight with an index of 0. In this case, a weighted sum may be an average. According to this embodiment, the importance of a weight set having the same weight value may be preferentially considered. In addition, as an example, as in Embodiment 2 described above, when the same weight candidate (or weight set) is not included in a weight candidate list, the above-described process may be performed through comparison with a first candidate in a corresponding list. The above-described process may be shown as in Table 16.

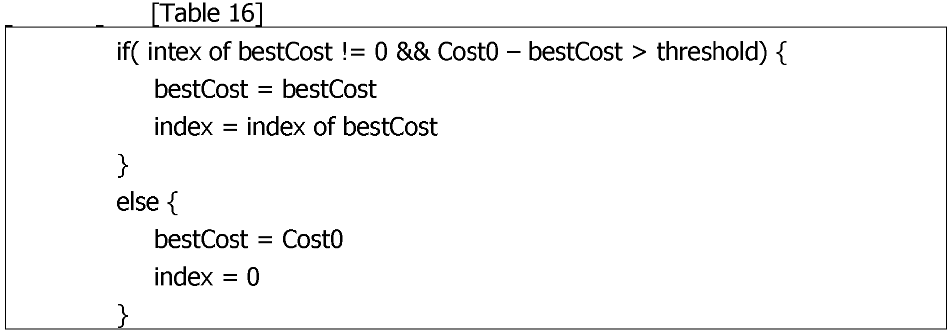

In Table 16, bestCost represents a cost of a candidate having the lowest cost in a weight candidate list.

As an example, a threshold value may be different according to at least one of an inter prediction mode, a size of a block or whether bidirectional prediction is performed. As an example, for a prediction method that may consider a fine motion such as an affine prediction mode or a template matching mode, a threshold value may be configured relatively small to reflect a fine weight change.

In addition, as an example, since a prediction error of a unidirectional prediction block tends to be larger than that of a bidirectional prediction block, another threshold value or a weight of a threshold value may also be configured like lambda * threshold for a unidirectional prediction block or an AMVP-MERGE mode.

### Embodiment 8

The above-described weight index or weighted prediction flag may be referred to by a spatial, temporal or non-adjacent spatial neighboring block. As described in Embodiment 1 above, when a weight candidate list is reordered, an index may be determined based on reordered order. Accordingly, an embodiment of the present disclosure describes a method for propagating (or storing) a weight index by considering a case in which a weight candidate list is reordered.

According to an embodiment of the present disclosure, when a weight used for weighted prediction of a current block is determined based on a reordered weight candidate list, an index in a non-reordered weight candidate list may be stored for propagation to a next block.

When a weight index is signaled based on a reordered weight candidate list, a weight index that is not the same as candidate order in a predefined weight candidate list, i.e., in a weight candidate list before reordering, may be signaled. If it is stored as it is, a problem occurs in which a block referring to a corresponding block may use a value that is not a weight factor applied to the corresponding block.

Accordingly, separately from a signaled index, an index of a predefined weight candidate list, i.e., a weight candidate list before reordering, may be stored for propagation to a block decoded later. In addition, even when a weight index is derived, an index value before reordering may be stored to ensure that an index in a predefined weight candidate list may be propagated.

As an example, a weight index in this embodiment may be encoded based on an index of a candidate list pre-defined equally for an encoding device and a decoding device, not a reordered weight candidate list. In this case, the process of calculating a cost for each weight candidate belonging to the weight candidate list and the process of reordering weight candidates of a weight candidate list based on a calculated cost may be omitted. The weight index may indicate any one of a plurality of weight candidates belonging to a weight candidate list. A weight candidate indicated by the weight index may be configured as a weight of a current block.

### Embodiment 9

A method for applying an embodiment of the present disclosure to an inter prediction mode other than the above-described prediction mode is described. As an example, the other inter prediction mode may include at least one of a geometric partitioning mode (GPM), a combined inter and intra prediction (CIIP) mode or a GPM-Intra mode. Here, a GPM-Intra mode represents a method in which a prediction block is generated by performing geometric division in a method equal or similar to a GPM and applying inter prediction and intra prediction to a divided partition, respectively.

In general, weighted prediction is applied to a bidirectional prediction block, but for a GPM mode, each partition performs unidirectional prediction, so a weight for weighted prediction is not considered. In other words, in configuring a candidate for a GPM mode, for a GPM candidate, a weight for a weighted sum of a prediction block is configured as a default weight. However, according to an embodiment of the present disclosure, weighted prediction may be performed even when unidirectional weighted prediction is applied. It is described by referring to FIG. 7 below.

FIG. 7 is a flowchart showing a weighted prediction method based on a geometric partitioning mode according to an embodiment of the present disclosure.

Referring to FIG. 7, a decoding device may derive a weight index from a prediction candidate when a GPM mode is applied S700. A decoding device may derive a weight index from a prediction candidate. In other words, a decoding device may inherit a weight index in the process of configuring a candidate list for a GPM mode.

A decoding device may determine whether a derived weight is a default value S710. When a derived weight is not a default value, a derived weight may be applied to a prediction block of each partition to perform weighted prediction S720 and S730, generating a final prediction block S740.

When a derived weight is a default value, a decoding device may generate a final prediction block by averaging a prediction block of each partition S750 and S760. Alternatively, when a derived weight is a default value, a decoding device may generate a final prediction block by generating and combining a prediction block of each partition by applying a scaling factor and an offset based on a determined weight when GPM-based weighted prediction is possible. As an example, a weight of each partition may be derived only when at least one of unidirectional weighted prediction, GPM or GPM-Intra is applied to a neighboring block. In addition, as an example, also for GPM-Intra, the same process may be applied to perform inter prediction.

In addition, generally, weighted prediction may not be performed when CIIP is applied. Although a weight index is inherited in the inter prediction process of CIIP, an average prediction block may always be generated without considering a weight index in an actual prediction sample generation process. According to an embodiment of the present disclosure, weighted prediction may also be applied to CIIP to improve prediction performance. For a bidirectional prediction block, a final block may be generated by considering a weight index determined through a weight derivation process, and as described in the present disclosure, a weight index may also be derived and applied to a unidirectional prediction block.

### Embodiment 10

In an embodiment of the present disclosure, a method for propagating or storing a weight index derived and modified through GPM, CIIP and GPM-Intra processes is described. When a current block is decoded in a GPM or GPM-Intra mode, a unidirectional weight index of each partition may be stored, and for a blending region, a weight index of a specific partition may be stored.

As an example, a decoding device may store a weight index of a partition referring to a close reference picture based on a POC (picture order count) difference between a current picture and a reference picture.

Alternatively, a weight index in which a weight indicated by a weight index has a value close to a default value may be stored. Here, when generating a prediction sample by applying a weight is expressed as (W×P)>>shift, a case in which W is 8 if shift is assumed as 4 may be shown as a default value.

Alternatively, a decoding device may store a weight index of a partition that occupies a large region of a block by considering a partitioning angle or shape of GPM. A method for storing a weight index may be predefined according to a partitioning angle or shape of GPM. For example, for angle index > th, a weight index of a first partition may be stored, and otherwise, a weight index of a second partition may be stored. Here, th represents a threshold value of an angle index.

In addition, in an embodiment, even when a weight index and weighted prediction are not applied to GPM and GPM-Intra modes, a weight may be derived for propagation to a next block. Specifically, in the process of generating an inter prediction sample in GPM and GPM-Intra modes, considering that a final prediction sample is generated by deriving a weight factor by distance from a boundary based on a partitioning boundary, a representative weight of a blending region (i.e., a weighted sum region) may be mapped to a weight index and stored.

In addition, in an embodiment, a weight between two partitions of a blending region may be derived as a representative value in a unit of a 4x4 block. An index of a candidate in a weight candidate list most similar to a representative value may be stored in a unit of each block. In this case, when it is not a blending region, it may be stored as a default value.

In addition, in an embodiment, a weight between two partitions at the center position of a current block may be mapped to a candidate in a weight candidate list and stored as a weight index without considering a partitioning boundary.

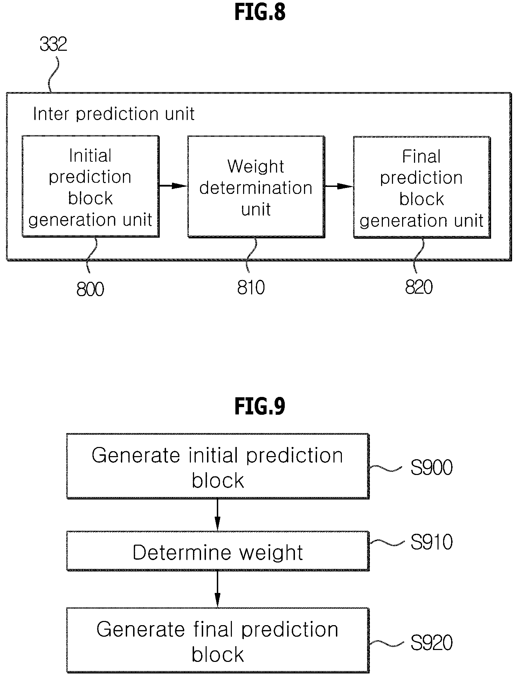

FIG. 8 shows a schematic configuration of an inter predictor 332 that performs an inter prediction method according to the present disclosure.

Referring to FIG. 8, an inter predictor 332 may include an initial prediction block generation unit 800, a weight determination unit 810 and a final prediction block generation unit 820.

An initial prediction block generation unit 800 may generate an initial prediction block. An initial prediction block generation unit 800 may generate a first prediction block of a current block based on a first prediction mode, and may generate a second prediction block of a current block based on a second prediction mode. In the present disclosure, a first prediction block and/or a second prediction block that are weighted summed to generate a final prediction block may be referred to as an initial prediction block. In addition, in the present disclosure, a first prediction block and/or a second prediction block may be referred to as a reference block.

As an example, a first prediction mode may represent prediction in a L0 direction, and a second prediction mode may represent prediction in a L1 direction. In other words, a current block may be a bidirectional prediction block. Alternatively, as an example, a current block may be a unidirectional prediction block. Of course, an embodiment of the present disclosure may be applied when a general inter prediction method such as a merge mode or an AMVP is applied to a current block, and in addition to this, a variety of other inter prediction methods may be applied. As an example, a first prediction mode may be a merge mode, and a second prediction mode may be an AMVP mode.

Alternatively, as an example, a current block may be divided into a plurality of partitions based on a geometric partitioning mode, and the plurality of partitions may include a first partition and a second partition. In this case, a first prediction mode may represent prediction using prediction information of the first partition, and a second prediction mode may represent prediction using prediction information of the second partition. Prediction information of the first partition may be motion information of the first partition or may be intra prediction information of the first partition. Similarly, prediction information of the second partition may be motion information of the second partition or may be intra prediction information of the second partition. In other words, an initial prediction block may be generated based on a GPM or GPM-Intra mode. A GPM-Intra mode represents a mode in which one GPM partition performs inter prediction and another GPM partition performs intra prediction. Initial prediction blocks may be generated by the prediction information of each GPM partition.

A weight determination unit 810 may determine a weight. A decoding device may determine a weight used for a current block based on a weight candidate list including a plurality of predefined weight candidates. In this case, a method described in FIGS. 4 to 7 and Embodiments 1 to 10 regarding a method for determining a weight applied to a current block based on a weight candidate list may be applied, and an overlapping description is omitted here.

A final prediction block generation unit 820 may generate a final prediction block based on a determined weight. A final prediction block generation unit 820 may generate a final prediction block by weighted summing initial prediction blocks based on a determined weight. In other words, a decoding device may generate a third prediction block of a current block by weighted summing a first prediction block and a second prediction block.

FIG. 9 shows an inter prediction method performed by an encoding device 200 as an embodiment according to the present disclosure.

Referring to FIG. 9, an encoding device may generate an initial prediction block S900. An encoding device may generate a first prediction block of a current block based on a first prediction mode, and generate a second prediction block of a current block based on a second prediction mode. In the present disclosure, a first prediction block and/or a second prediction block that are weighted summed to generate a final prediction block may be referred to as an initial prediction block. In addition, in the present disclosure, a first prediction block and/or a second prediction block may be referred to as a reference block.

As an example, a first prediction mode may represent prediction in a L0 direction, and a second prediction mode may represent prediction in a L1 direction. In other words, a current block may be a bidirectional prediction block. Alternatively, as an example, a current block may be a unidirectional prediction block. Of course, an embodiment of the present disclosure may be applied when a general inter prediction method such as a merge mode or an AMVP is applied to a current block, and in addition to this, a variety of other inter prediction methods may be applied. As an example, a first prediction mode may be a merge mode, and a second prediction mode may be an AMVP mode.

Alternatively, as an example, a current block may be divided into a plurality of partitions based on a geometric partitioning mode, and the plurality of partitions may include a first partition and a second partition. In this case, a first prediction mode may represent prediction using prediction information of the first partition, and a second prediction mode may represent prediction using prediction information of the second partition. Prediction information of the first partition may be motion information of the first partition or may be intra prediction information of the first partition. Similarly, prediction information of the second partition may be motion information of the second partition or may be intra prediction information of the second partition. In other words, an initial prediction block may be generated based on a GPM or GPM-Intra mode. A GPM-Intra mode represents a mode in which one GPM partition performs inter prediction and another GPM partition performs intra prediction. Initial prediction blocks may be generated by the prediction information of each GPM partition.

An encoding device may determine a weight S910. An encoding device may determine a weight used for a current block based on a weight candidate list including a plurality of predefined weight candidates. In this case, a method described in FIGS. 4 to 7 and Embodiments 1 to 10 regarding a method for determining a weight applied to a current block based on a weight candidate list may be applied in substantially the same manner, and an overlapping description is omitted here.

Specifically, as in Embodiment 1, a method for calculating a cost of a candidate included in a weight candidate list and a method for reordering a cost-based weight candidate list may be performed in the same manner in an encoding device and a decoding device. As in Embodiment 2, for a method for signaling a weight index or a weighted prediction flag according to a predefined condition, encoding for a weight index or a weighted prediction flag may be performed according to a predefined condition in the same manner in an encoding device. For Embodiments 3 to 10, an encoding device and a decoding device may store a weight candidate list in the same manner, determine a weight in a unit of a block and generate a prediction sample based on a determined weight.

An encoding device may generate a final prediction block based on a weight determined in S910 S920. An encoding device may generate a final prediction block by weighted summing initial prediction blocks based on a determined weight. In other words, an encoding device may generate a third prediction block of a current block by weighted summing a first prediction block and a second prediction block.

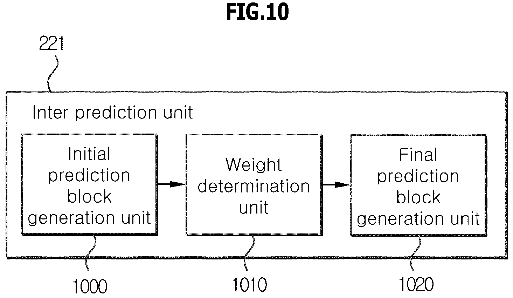

FIG. 10 shows a schematic configuration of an inter predictor 221 that performs an inter prediction method according to the present disclosure.

Referring to FIG. 10, an inter predictor 221 may include an initial prediction block generation unit 1000, a weight determination unit 1010 and a final prediction block generation unit 1020.

Referring to FIG. 10, an initial prediction block generation unit 1000 may generate an initial prediction block. An initial prediction block generation unit 1000 may generate a first prediction block of a current block based on a first prediction mode, and may generate a second prediction block of a current block based on a second prediction mode. In the present disclosure, a first prediction block and/or a second prediction block that are weighted summed to generate a final prediction block may be referred to as an initial prediction block. In addition, in the present disclosure, a first prediction block and/or a second prediction block may be referred to as a reference block.

As an example, a first prediction mode may represent prediction in a L0 direction, and a second prediction mode may represent prediction in a L1 direction. In other words, a current block may be a bidirectional prediction block. Alternatively, as an example, a current block may be a unidirectional prediction block. Of course, an embodiment of the present disclosure may be applied when a general inter prediction method such as a merge mode or an AMVP is applied to a current block, and in addition to this, a variety of other inter prediction methods may be applied. As an example, a first prediction mode may be a merge mode, and a second prediction mode may be an AMVP mode.

Alternatively, as an example, a current block may be divided into a plurality of partitions based on a geometric partitioning mode, and the plurality of partitions may include a first partition and a second partition. In this case, a first prediction mode may represent prediction using prediction information of the first partition, and a second prediction mode may represent prediction using prediction information of the second partition. Prediction information of the first partition may be motion information of the first partition or may be intra prediction information of the first partition. Similarly, prediction information of the second partition may be motion information of the second partition or may be intra prediction information of the second partition. In other words, an initial prediction block may be generated based on a GPM or GPM-Intra mode. A GPM-Intra mode represents a mode in which one GPM partition performs inter prediction and another GPM partition performs intra prediction. Initial prediction blocks may be generated by the prediction information of each GPM partition.

A weight determination unit 1010 may determine a weight. A weight determination unit 1010 may determine a weight used for a current block based on a weight candidate list including a plurality of predefined weight candidates. In this case, a method described in FIGS. 4 to 8 and Embodiments 1 to 10 regarding a method for determining a weight applied to a current block based on a weight candidate list may be applied in substantially the same manner, and an overlapping description is omitted here.

Specifically, as in Embodiment 1, a method for calculating a cost of a candidate included in a weight candidate list and a method for reordering a cost-based weight candidate list may be performed in the same manner in an encoding device and a decoding device. As in Embodiment 2, for a method for signaling a weight index or a weighted prediction flag according to a predefined condition, encoding for a weight index or a weighted prediction flag may be performed according to a predefined condition in the same manner in an encoding device. For Embodiments 3 to 10, an encoding device and a decoding device may store a weight candidate list in the same manner, determine a weight in a unit of a block and generate a prediction sample based on a determined weight.

A final prediction block generation unit 1020 may generate a final prediction block based on a determined weight. A final prediction block generation unit 1020 may generate a final prediction block by weighted summing initial prediction blocks based on a determined weight. In other words, a final prediction block generation unit 1020 may generate a third prediction block of a current block by weighted summing a first prediction block and a second prediction block.

In the above-described embodiment, methods are described based on a flowchart as a series of steps or blocks, but a corresponding embodiment is not limited to the order of steps, and some steps may occur simultaneously or in different order with other steps as described above. In addition, those skilled in the art may understand that steps shown in a flowchart are not exclusive, and that other steps may be included or one or more steps in a flowchart may be deleted without affecting the scope of embodiments of the present disclosure.

The above-described method according to embodiments of the present disclosure may be implemented in a form of software, and an encoding device and/or a decoding device according to the present disclosure may be included in a device which performs image processing such as a TV, a computer, a smartphone, a set top box, a display device, etc.

In the present disclosure, when embodiments are implemented as software, the above-described method may be implemented as a module (a process, a function, etc.) that performs the above-described function. A module may be stored in a memory and may be executed by a processor. A memory may be internal or external to a processor, and may be connected to a processor by a variety of well-known means. A processor may include an application-specific integrated circuit (ASIC), another chipset, a logic circuit and/or a data processing device. A memory may include a read-only memory (ROM), a random access memory (RAM), a flash memory, a memory card, a storage medium and/or another storage device. In other words, embodiments described herein may be performed by being implemented on a processor, a microprocessor, a controller or a chip. For example, functional units shown in each drawing may be performed by being implemented on a computer, a processor, a microprocessor, a controller or a chip. In this case, information for implementation (ex. information on instructions) or an algorithm may be stored in a digital storage medium.

In addition, a decoding device and an encoding device to which embodiment(s) of the present disclosure are applied may be included in a multimedia broadcasting transmission and reception device, a mobile communication terminal, a home cinema video device, a digital cinema video device, a surveillance camera, a video conversation device, a real-time communication device like a video communication, a mobile streaming device, a storage medium, a camcorder, a device for providing video on demand (VoD) service, an over the top video (OTT) device, a device for providing Internet streaming service, a three-dimensional (3D) video device, a virtual reality (VR) device, an argumente reality (AR) device, a video phone video device, a transportation terminal (ex. a vehicle (including an autonomous vehicle) terminal, an airplane terminal, a ship terminal, etc.) and a medical video device, etc., and may be used to process a video signal or a data signal. For example, an over the top video (OTT) device may include a game console, a blu-ray player, an Internet-connected TV, a home theater system, a smartphone, a tablet PC, a digital video recorder (DVR), etc.

In addition, a processing method to which embodiment(s) of the present disclosure are applied may be produced in a form of a program executed by a computer and may be stored in a computer-readable recording medium. Multimedia data having a data structure according to embodiment(s) of the present disclosure may be also stored in a computer-readable recording medium. The computer-readable recording medium includes all types of storage devices and distributed storage devices that store computer-readable data. The computer-readable recording medium may include, for example, a blu-ray disk (BD), an universal serial bus (USB), ROM, PROM, EPROM, EEPROM, RAM, CD-ROM, a magnetic tape, a floppy disk and an optical media storage device. In addition, the computer-readable recording medium includes media implemented in a form of a carrier wave (e.g., transmission via the Internet). In addition, a bitstream generated by an encoding method may be stored in a computer-readable recording medium or may be transmitted through a wired or wireless communication network.

In addition, embodiment(s) of the present disclosure may be implemented by a computer program product by a program code, and the program code may be executed on a computer by embodiment(s) of the present disclosure. The program code may be stored on a computer-readable carrier.

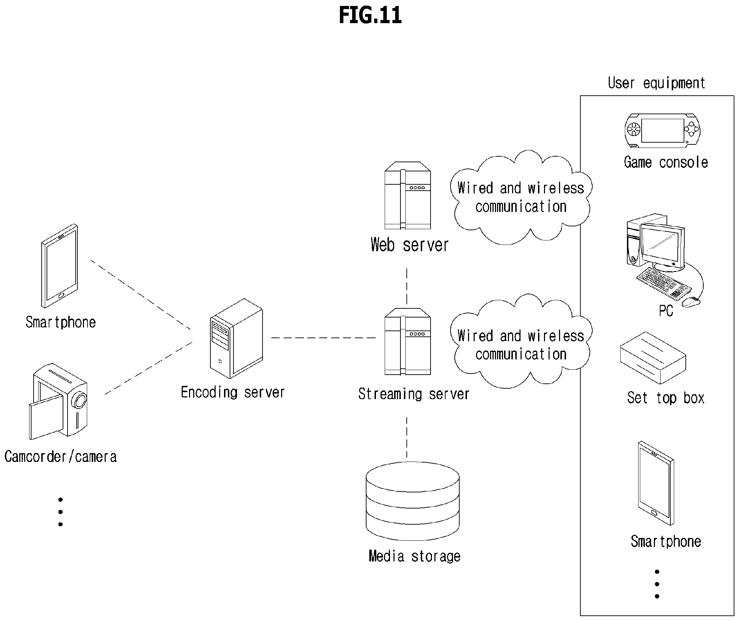

FIG. 11 shows an example of a contents streaming system to which embodiments of the present disclosure may be applied.

Referring to FIG. 11, a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device claim of the present disclosure may be combined and implemented as a method. In addition, a technical characteristic of a method claim of the present disclosure and a technical characteristic of a device claim may be combined and implemented as a device, and a technical characteristic of a method claim of the present disclosure and a technical characteristic of a device claim may be combined and implemented as a method.

## Claims

1. An image decoding method, the method comprising:
generating a first prediction block of a current block based on a first prediction mode, and generating a second prediction block of the current block based on a second prediction mode;
based on a weight candidate list including a plurality of pre-defined weight candidates, determining a weight used for the current block; and
based on the determined weight, generating a third prediction block of the current block by weighted summing of the first prediction block and the second prediction block.

2. The method of claim 1, wherein:
the first prediction mode represents a prediction in a L0 direction, and the second prediction mode represents a prediction in a L1 direction.

3. The method of claim 1, wherein:
determining the weight includes calculating Sum of Absolute Difference (SDA) values corresponding to the plurality of weight candidates, respectively,
the SAD values are calculated based on a reference template region and a template region of the current block,
the reference template region is derived by weighted summing a template region of a L0 reference block and a template region of a L1 reference block based on a weight candidate.

4. The method of claim 3, wherein:
a reordered weight candidate list is generated by reordering the plurality of weight candidates in an ascending order of the SAD values,
the weight used for the current block is determined from the reordered weight candidate list.

5. The method of claim 3, wherein:
the method further includes obtaining a flag indicating whether a weighted prediction is performed for the current block from a bitstream.

6. The method of claim 5, wherein:
when the flag indicates that the weighted prediction is performed for the current block, the weight used for the current block is determined based on a weight candidate having a smallest SAD value among the SAD values.

7. The method of claim 5, wherein:
when the flag indicates that the weighted prediction is not performed for the current block, a weight applied to the first prediction block and a weight applied to the second prediction block are determined as a same value.

8. The method of claim 3, wherein:
the method further includes determining whether a weighted prediction is available for the current block based on a predefined condition.

9. The method of claim 8, wherein:
when the weighted prediction is available for the current block, the weight used for the current block is determined based on a weight candidate having a smallest SAD value among the SAD values.

10. The method of claim 8, wherein:
when the weighted prediction is not available for the current block, a weight applied to the first prediction block and a weight applied to the second prediction block are determined as a same value.

11. The method of claim 1, wherein:
the weight candidate list is configured based on an inter prediction mode of the current block, whether a bi-prediction is applied or a size of the current block.

12. The method of Claim 1, wherein:
the current block is divided into a plurality of partitions based on a geometric partitioning mode,
the plurality of partitions include a first partition and a second partition,
the first prediction mode represents a prediction using prediction information of the first partition, and the second prediction mode represents a prediction using prediction information of the second partition.

13. An image encoding method, the method comprising:
generating a first prediction block of a current block based on a first prediction mode, and generating a second prediction block of the current block based on a second prediction mode,
based on a weight candidate list including a plurality of pre-defined weight candidates, determining a weight used for the current block; and
based on the determined weight, generating a third prediction block of the current block by weighted summing of the first prediction block and the second prediction block.

14. A computer readable storage medium storing a bitstream generated by an image encoding method according to claim 13.

15. A method for transmitting data for image information, the method comprising:
generating a first prediction block of a current block based on a first prediction mode, and generating a second prediction block of the current block based on a second prediction mode,
based on a weight candidate list including a plurality of pre-defined weight candidates, determining a weight used for the current block;
based on the determined weight, generating a third prediction block of the current block by weighted summing of the first prediction block and the second prediction block;
generating a bitstream by encoding the current block based on the third prediction block; and
transmitting data including the bitstream.
